# EUROPEAN PATENT APPLICATION

(11) **EP 0 613 094 A2**
(43) Date of publication of application: **31.08.1994**
(21) Application number: 93309178.7
(22) Date of filing: 17.11.1993
(51) Int. Cl.: G06F 15/31, G06F 9/445

(54) **Signal processing system having a DSP-based CPU**

(30) Priority: 25.02.1993 US 23659
(71) Applicant: FLUKE CORPORATION, Everett, Washington 98206-9090 (US)
(72) Inventor: Beckert, Richard D., Lake Stevens, Washington 98258 (US)
(74) Representative: Burke, Steven David

(57) **Abstract**

A signal processing instrument has a DSP-based CPU coupled to memory means the contents of which define system control instructions, signal processing instructions and data. An input means converts an input signal to digital information, and the CPU is coupled to the input means and to at least one peripheral input or output device, the CPU being arranged to control the instrument in response to the system control instructions, to perform signal processing operations on the digital information in response to the signal processing instructions and the data, and to produce an output as a result of the signal processing operations.

## Description

### Background of the Invention

The present invention relates generally to signal processors, and more particularly, to signal processing systems utilizing digital signal processors (DSPs).

Signal processors are used in various applications involving the manipulation or analysis of electrical signals. Typical uses include filtering signals, mixing two or more signals (convolution), comparing different signals (correlation), and analyzing signals in both the time and frequency domains (transformation).

For years, signal processing was performed by signal processors consisting of analog circuits. The analog components made these analog signal processors relatively large and difficult to maintain and operate. The trend in modern signal processing applications has been to switch from analog signal processors to digital signal processors, or DSPs. DSPs use digital components and software to perform the various signal processing functions once performed by their analog counterparts. DSPs are more efficient and cost effective than the analog signal processors they replaced, in part, due to the high degree of integration available with digital circuits and because functional changes in DSPs are made in software rather than in analog hardware.

Many modern instruments used in signal processing applications utilize a signal processing system that incorporates a general purpose microprocessor in addition to a DSP. The general purpose microprocessor includes a central processing unit, or CPU, that performs a variety of system control functions including storing and retrieving data and communicating with peripheral devices, in addition to controlling the DSP. The use of a general purpose microprocessor and a DSP can be an effective and powerful system for many signal processing applications, especially when incorporated into benchtop instruments where power and space are readily available.

Some signal processing instruments forego the use of a general purpose microprocessor and utilize a dedicated DSP chip to perform specific signal processing functions. These instruments make use of the limited memory of the DSP chip and, as such, have limited ability to perform any system control functions.

In a portable electronic test tool, it is desirable to have a versatile signal processing capability so that the tool can be used in many different applications. Unfortunately, the dedicated DSP chip approach used in some prior art instruments tends to limit the tools usefulness. On the other hand, the versatility offered by combining a general purpose microprocessor and a DSP may be problematic in that the compact size of the tool may preclude use of two processors. In addition, the batteries that supply power for the portable tool will discharge more quickly when operating two processors as opposed to one. Further, the presence of both a microprocessor and a DSP raises the component count as well as the cost of manufacturing the test tool.

Accordingly, there is a need for a versatile, cost effective, portable electronic test tool having digital signal processing capability. The present invention, directed to a signal processing system having a programmable DSP-based central processing unit, is designed to achieve these results.

### Summary of the Invention

A signal processing system includes input circuitry for receiving an analog signal and converting the analog signal to digital information and a DSP-based CPU having memory for storing a program containing system control instructions, signal processing instructions and data. The DSP-based CPU is coupled to receive the digital information from the input circuitry and controls the signal processing system as directed by the system control instructions, performs signal processing operations on the digital information as directed by the signal processing instructions using the data, and produces an output based on the results of the signal processing operations.

In accordance with further aspects of the present invention, a signal processing system employs a method for performing system control and signal processing using a DSP-based CPU. The method includes the steps of converting an analog signal to digital information and reading system control instructions, signal processing instructions and data into the DSP-based CPU. The method further includes the steps of performing system control functions with the DSP-based CPU as directed by the system control instructions and performing signal processing operations on the digital information with the DSP-based CPU as directed by the signal processing instructions. The method also includes the step of producing an output that is based on results of the signal processing operations.

As will be appreciated from the foregoing summary, the present invention provides a signal processing system having a DSP-based CPU for performing various system control and signal processing functions, and a method for accomplishing the same.

### Brief Description of the Drawings

The foregoing and other advantages of this invention will become more readily appreciated as the same becomes better understood by reference to the following description of a preferred embodiment taken in conjunction with the accompanying drawings, wherein:
FIGURE 1 is a block diagram of a prior art signal processing system utilizing a general purpose microprocessor and a digital signal processor (DSP);
FIGURE 2 is a block diagram of a prior art, application-specific signal processing system utilizing a DSP-without a general purpose microprocessor;
FIGURE 3 is a simplified block diagram of a signal processing system incorporating a DSP-based central processing unit (CPU) in accordance with a preferred embodiment of the present invention;
FIGURE 4 is a block diagram illustrating in slightly greater detail the signal processing system of FIGURE 3, as it may be implemented in a portable electronic test tool;
FIGURE 5 illustrates in block diagram form, how various memories in the signal processing system of FIGURE 3 are utilized according to the present invention;
FIGURE 6 is a flow chart illustrating, in broad functional steps, a program executed by the DSP-based CPU according to the present invention; and,
FIGURE 7 is a flow chart illustrating, in somewhat greater detail, the program step of FIGURE 6 for loading program code and initializing data memories.

### Description of the Preferred Embodiment

As will be discussed more fully below, the present invention is directed to a signal processing system having a programmable, DSP-based CPU that performs both system control functions and signal processing operations. Accordingly, an electronic test tool employing the present invention does not require a general purpose microprocessor.

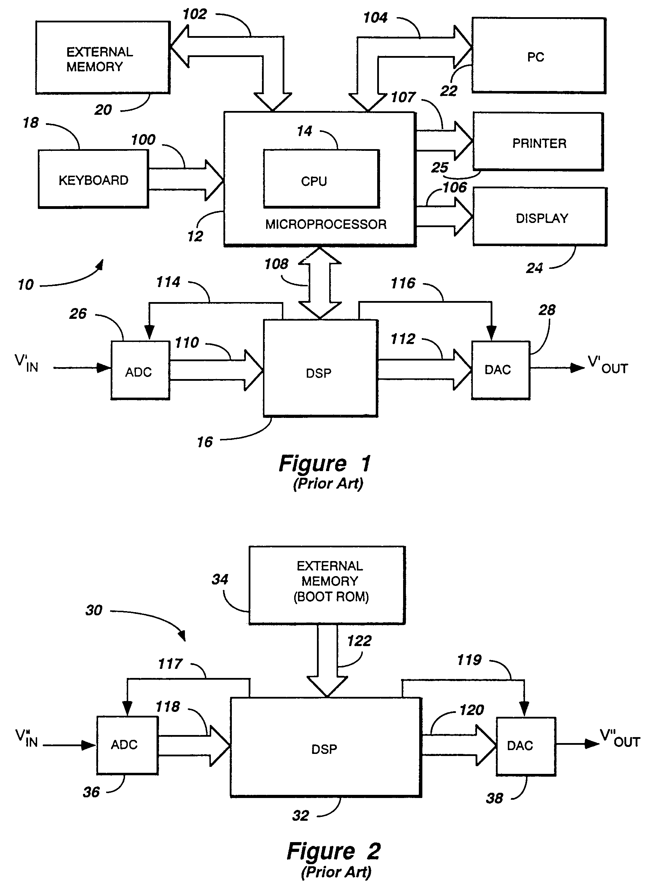

FIGURE 1 illustrates a typical, prior art signal processing system 10 used in digital signal processing applications. The system comprises: a general purpose microprocessor 12, a digital signal processor (DSP) 16, and a number of peripheral devices (18-25). The peripheral devices include, for purposes of illustration, keyboard 18, external memory 20, personal computer (PC) 22, display 24 and printer 25. Microprocessor 12 includes a central processing unit (CPU) 14 and provides overall control and data management functions for system 10.

In a signal processing application, analog input signal, V'_{IN}, is applied to analog-to-digital converter (ADC) 26 and converted to digital information, which is then supplied to DSP 16 via bus 110. DSP 16 performs one or more signal processing operations on the digital information in response to instructions downloaded to the DSP from microprocessor 12. Alternatively, the DSP may load its program at power up from the boot ROM (i.e., external memory 20), thereby eliminating the need to download from the microprocessor. The output of DSP 16 is supplied to digital-to-analog converter (DAC) 28 via bus 112, where it is converted back into an analog signal, V'_{OUT}. DSP 16 normally controls ADC 26 and DAC 28 since they are high speed devices that need to be synchronized with the DSP operations. The control of ADC 26 and DAC 28 is represented in FIGURE 1 by control lines 114 and 116, respectively.

Microprocessor 12 is responsive to instructions provided by an operator from keyboard 18 or PC 22, via busses 100 and 104, respectively. The microprocessor interprets these instructions and causes the appropriate actions to be taken. For example, if the operator wishes to perform a filtering operation on V'_{IN}, he or she may enter the appropriate commands on keyboard 18. In response to these commands, microprocessor 12 accesses either its internal memory (not shown) or external memory 20 via bus 102, and retrieves the appropriate filtering algorithm and any associated data to be used with the algorithm. This information is then loaded into memory in DSP 16, thereby permitting the DSP to perform the filtering operation. In this example, the output of the DSP is digital information related to the filtered signal and may be supplied to DAC 28, where it is converted back into analog form, i.e., V'_{OUT}. The user could also instruct microprocessor 12 to display the output of DSP 16, in which case microprocessor 12 extracts the processed data from the DSP and supplies the information to display 24 via bus 106. The user may also instruct microprocessor 12 to store the information in memory 20 so that it can be down loaded to PC 22 at some point in time for further processing.

FIGURE 2 illustrates another prior art, signal processing system 30 comprising DSP 32 and the following peripheral devices: external memory (BOOT ROM) 34, ADC 36 and DAC 38. In a signal processing application, input signal V''_{IN} is converted into related digital information by ADC 36, which is applied to DSP 32 via bus 118. The output of DSP 32 is supplied to DAC 38, via bus 120, where it is converted to analog signal V''_{OUT}. ADC 36 and DAC 38 are typically controlled by DSP 32, as depicted in FIGURE 2, by control lines 117 and 119, respectively. External memory 34 contains code that is loaded into DSP 32, via bus 122, during system boot-up.

As is apparent from FIGURE 2, signal processing system 30 does not utilize a general-purpose microprocessor. Rather, DSP 32 performs all system control and data management functions in addition to the signal processing functions. However, the functions of signal processing system 30 are typically more limited than with system 10 illustrated in FIGURE 1. The signal processing system of FIGURE 2, may be limited to performing only a specific digital signal processing function, such as FFT for example, in which case the only instructions loaded into DSP 32 are the instructions necessary to carry out the FFT algorithms. As such, DSP 32 provides little or no control of peripheral devices other than ADC 36 and DAC 38. These limitations are due, in part, to the amount of memory in the DSP, which is typically less than that in a general purpose microprocessor and not adequate to perform numerous system control functions in addition to signal processing operations. In addition, the limited memory makes the DSPs less convenient to program than general purpose microprocessors.

In summary, prior art system 10 (FIGURE 1) uses a general purpose microprocessor and, therefore, is saddled with the space and power requirements of two processors as well as their associated costs. The signal processing system 30 (FIGURE 2) operates without a general purpose microprocessor but tends to be very application specific, such that multiple systems of the type depicted in FIGURE 2 may have to be used in applications where different signal processing functions are to be performed.

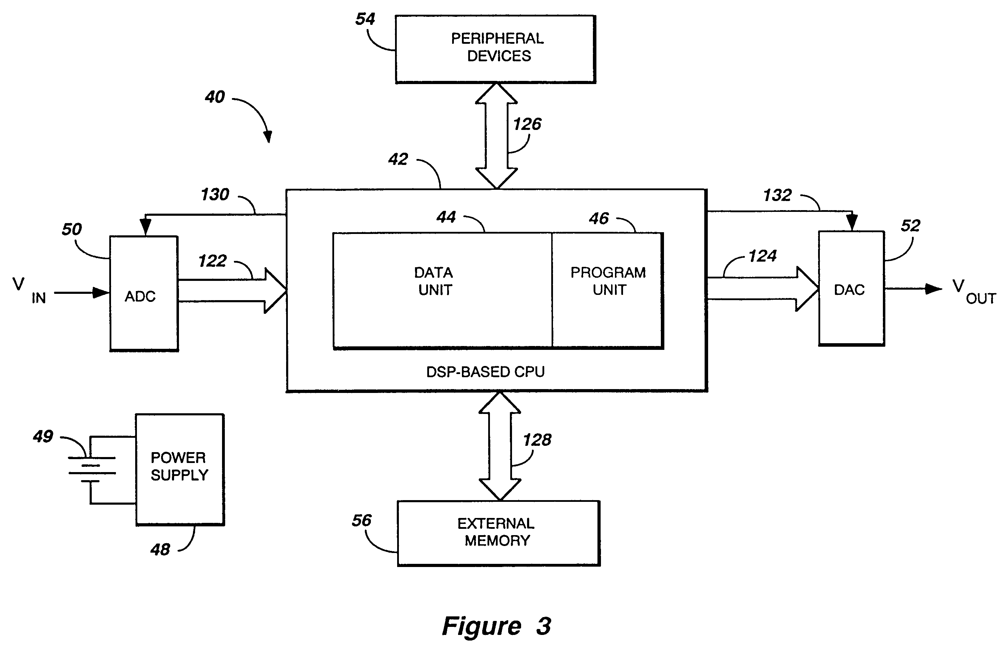

Turning now to FIGURE 3, there is illustrated a signal processing system 40 according to a preferred embodiment of the present invention. System 40 includes a programmable, DSP-based central processing unit (CPU) 42 comprising data unit 44 and program unit 46. Data unit 44 includes an arithmetic-logic unit and memory (not shown in FIGURE 3) for storing and manipulating data according to instructions received from program unit 46. Program unit 46 includes a program controller and memory (not shown in FIGURE 3) that contain digital signal processing algorithms and instructions for controlling CPU 42 and other components of system 40 discussed below. Signal processing system 40 further includes one or more peripheral devices 54 (depicted collectively in FIGURE 3 as one block for purposes of clarity), analog-to-digital converter (ADC) 50, digital-to-analog converter (DAC) 52 and external memory 56. ADC 50 and DAC 52 are controlled by CPU 42, as represented by control lines 130 and 132, respectively. CPU 42 controls and exchanges information with peripheral devices block 54 via bus 126 and external memory 56 via bus 128. For purposes of clarity, control lines and data lines are shown collectively as busses It is to be understood, however, that separate control and data lines may be used. Power supply 48, which may include battery 49, supplies power to the various components of system 40.

CPU 42 is preferably a commercially available, low power, single-chip, programmable DSP. CPU 42 preferably has an internal, parallel bus structure that allows it to access program unit 46 while simultaneously accessing data unit 44. This allows CPU 42 to perform digital signal processing operations very efficiently because it is able to access data unit 44 and program unit 46 simultaneously without slowing down. An example of one DSP suitable for use as CPU 42 in accordance with the present invention is the model DSP56001 digital signal processor, manufactured by Motorola. The internal structure and operation of commercially available DSPs, such as the DSP56001, are readily available to persons in the electronics field, and therefore, are not discussed herein in detail.

As will be discussed more fully below, signal processing system 40 operates according to instructions and data residing in software (hereinafter "code") that permits DSP-based CPU 42 to perform signal processing operations as well as a variety of system control functions. The code is resident in system 40 and is preferably structured so that signal processing operations are performed in real, or near real, time.

The signal processing system 40 depicted in FIGURE 3 operates in a manner consistent with the following broad description. Analog input signal, V_{IN,} is converted into digital information by ADC 50 and presented to CPU 42 via bus 122. CPU 42 performs one or more signal processing operations on the digital information, and outputs resulting data. The resulting data is preferably stored in DSP-based CPU 42, but may be stored, either entirely or in part, in external memory 56. The resulting data may be supplied to DAC 52, via bus 124, where it is converted to an analog signal, V_{OUT}. Where peripheral device 54 is an input device, such as a keyboard, it provides input data to CPU 42 via bus 126. Where peripheral device 54 is an output device, such as a display, printer or personal computer, it receives data from CPU 42 via bus 126.

As introduced above, signal processing system 40 operates in accordance with code that permits CPU 42 to perform numerous signal processing operations, including FFT and inverse FFT, Goertzel transformations, decimation and filtering; and system functions such as controlling peripheral devices and manipulating data. This code is initially stored in external memory 56. When the system is initialized, CPU 42 is booted-up and some, or all, of the code is uploaded from external memory 56, via bus 128, to memories in program unit 46 and data unit 44.

Preferably, the code initially stored in external memory 56 is structured as time critical code and non-time critical code. Time critical code includes program instructions and data that effect the operating speed of signal processing system 40. Time critical program instructions may include instructions that control the various system level tasks, including controlling DSP-based CPU 42 and peripheral device(s) 54, storing and retrieving data in external memory 56, and controlling ADC 50 and DAC 52. These program instructions also include the algorithms and related instructions for the signal processing operations. Time critical data includes all data used in the algorithms, as well as data generated by the algorithms. Preferably, all time critical program instructions are stored in memory in program unit 46 and time critical data is stored in memory in data unit 44. CPU 42 accesses the code in these memories via its internal, parallel busses (not shown). Any program code or data code that is not loaded into program unit 46 or data unit 44 remains in external memory 56 where it is accessed by CPU 42 via bus 128, not via the internal parallel busses of CPU 42. In this manner, non-time critical code may be executed from external memory 56.

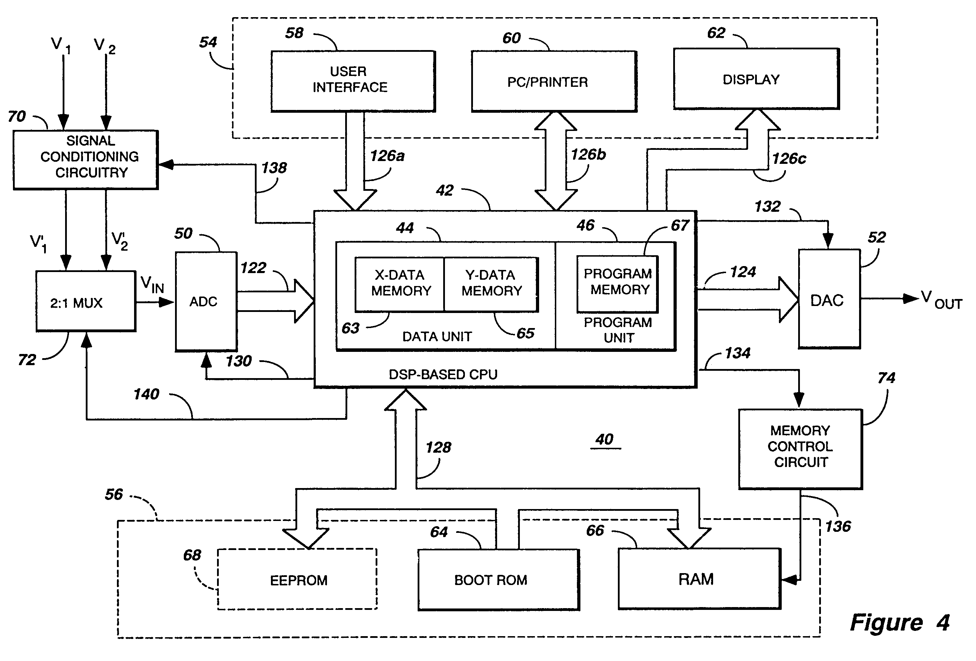

Turning next to FIGURE 4 there is shown in greater detail, the signal processing system 40 described above and illustrated in FIGURE 3. For purposes of clarity, elements common to FIGURES 3 and 4 are identified by identical reference numbers. As will be discussed more fully below, program unit 46 includes PROGRAM MEMORY 67 and data unit 44 includes X-MEMORY 63 and Y-MEMORY 65. The terms PROGRAM MEMORY, X-MEMORY AND Y-MEMORY, as used herein, are described in detail in a Motorola publication entitled "DSP56000/DSP56001 Digital Signal Processor User's Guide", Rev. 2, pages 1-7 and 1-8. As such, a detailed description of these memories is not repeated herein. Rather, it is merely presented that the PROGRAM MEMORY 67, X-DATA MEMORY 63 AND Y-DATA MEMORY 67 are internal to CPU 42 are accessible via the CPU's internal, parallel busses.

Signal processing system 40 is depicted in FIGURE 4 as forming part of a two channel electronic test tool capable of performing signal analysis on signals V₁ and V₂ and providing an output V_{OUT}. V₁ and V₂ are applied to signal conditioning circuitry 70, which provides the appropriate gain and anti-aliasing filtering to the signals and produces corresponding outputs V'₁ and V'₂. A 2:1 multiplexer (MUX) 72 receives the V'₁ and V'₂ signals and provides a multiplexed output, V_{IN}, which is converted to digital information by ADC 50 and applied to CPU 42 via bus 122. The digital output of CPU 42 appears on bus 124 and is converted by DAC 52 to produce V_{OUT}. CPU 42 controls signal conditioning circuitry 70 and MUX 72 via control lines 138 and 140, respectively. As noted above, CPU 42 also controls ADC 50 and DAC 52 via control lines 130 and 132, respectively. Power supply 48 and battery 49 (FIGURE 3) supply power to the various components of the electronic test tool in FIGURE 4.

It is to be understood that the particular configuration of the front-end circuitry discussed above is merely exemplary, and that other circuit arrangements would also be acceptable. For example, the V'₁ and V'₂ signals could be converted by a pair of analog-to-digital converters, whose outputs are multiplexed by a 2:1 digital MUX. In any event, the particular configuration of these components, and the other peripheral devices are not important to understanding the present invention.

Peripheral device 54 is depicted by a dashed box in FIGURE 4, and comprises user interface 58, PC/printer 60, and display 62. User interface 58 is preferably a keyboard with which the user supplies commands to DSP-based CPU 42 via bus 126a. PC/printer 60 is depicted as a single device, however, it is to be understood that it may be either a personal computer (PC) or a printer, or both. If, for example, additional signal analysis is required, device 60 may be a PC capable of performing the desired analysis. The PC could also be used to provide external control of CPU 42. Similarly, if the particular application requires a hard copy of certain information, a printer could be connected as device 60. Likewise a PC and printer combination could be coupled to the CPU 42. In any event, PC/printer 60 communicates with CPU 42 via bus 126b. Display 62 receives output information from CPU 42 via bus 126c and provides a display of this output. Display 62 may be any type of display device, and is preferably an energy efficient flat panel display, such as a LCD, for example.

External memory 56 is depicted by a dashed box in FIGURE 4, and comprises BOOT ROM 64 and RAM 66. A third and alternative memory device, EEPROM 68 (electrically erasable programmable ROM), is depicted as a dashed box within external memory 56 and will be discussed more fully below. BOOT ROM 64, RAM 66 and EEPROM 68 are external to the chip comprising DSP-based CPU 42. As discussed above, program instructions and data are loaded into CPU 42 during boot-up. More specifically, as depicted by FIGURE 4, program instructions and data are initially stored in BOOT ROM 64 and subsequently copied to the appropriate memories in CPU 42 during boot-up. If all of the code in BOOT ROM 64 cannot be stored in CPU 42, some or all of the excess is copied into RAM 66 from where it can be executed. If additional non-time critical code exists, it may be copied from BOOT ROM 64 to RAM 66 when needed. Because BOOT ROM 64 contains code that is rarely accessed (e.g. code that is only accessed during system boot up), it may be implemented as a relatively slow and inexpensive device without adversely affecting system performance to any significant degree. Examples of memory devices suitable for use as BOOT ROM 64 include ROM and EPROM (erasable programmable ROM) devices having a 250 nanosecond memory access time. RAM 66, on the other hand, stores excess program and data code that may be used by system 40 during operation, and therefore, is preferably a relatively fast memory device, such as a SRAM (static RAM) having a memory access time of 25 nanoseconds, for example.

RAM 66 is depicted in FIGURE 4 as a single device, however, it is to be understood that it may comprise more than one memory device. The actual number of memory devices comprising RAM 66 is dependant upon the amount of code that is to be stored therein. In any event, access to information contained in multiple memory devices comprising RAM 66 may be controlled through memory control circuit 74 via line 136. Control circuit 74, which is preferably a programmable logic device (PLD), is controlled by CPU 42 via control line 134.

As introduced above, external memory 56 includes EEPROM 68 in an alternative embodiment of the present invention. EEPROM 68 may be any non-volatile memory device suitable for storing the V_{IN} waveforms. The waveforms could be stored in EEPROM 68 to permit further analysis at a later point in time, either by system 40 or by other equipment. It is to be understood, however, that EEPROM 68 is not a necessary element of signal processing system 40 according to the present invention.

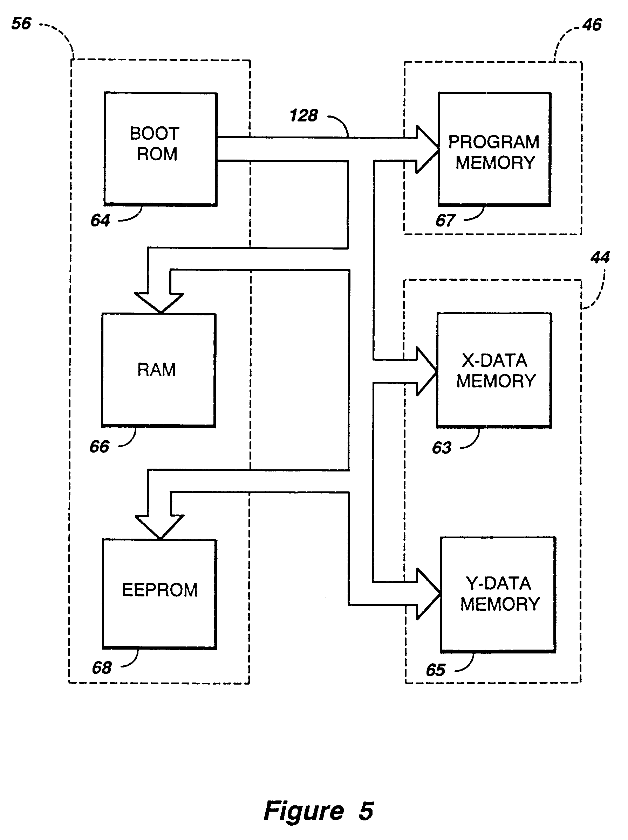

FIGURE 5 illustrates, in block diagram form, various memories of signal processing system 40 and the flow of information (i.e., code) therebetween. In FIGURE 5, external memories 56 (BOOT ROM 64, RAM 66 and EEPROM 68) are arranged along the left side of the sheet and the memories of program unit 46 (PROGRAM MEMORY 67) and data unit 44 (X-DATA MEMORY 63 AND Y-DATA MEMORY 65) are located along the right side.

As previously discussed, during boot-up of CPU 42, some or all program code is copied from BOOT ROM 64 into program unit 46 and data is loaded into data unit 44. More specifically as illustrated in FIGURE 5, program instructions are loaded into PROGRAM MEMORY 67. As discussed above, program code includes instructions related to system control as well as algorithms and associated instructions for signal processing operations. Similarly, and in accordance with the preferred embodiment of the present invention, data is loaded into X-MEMORY 63 and Y-MEMORY 65, and includes variables, constants, filter coefficients and data buffers for the DSP algorithms to be executed by system 40. Any excess program code or data that cannot be loaded into PROGRAM MEMORY 67, X-MEMORY 63 or Y-MEMORY 65 is copied into RAM 66 as previously discussed.

According to the alternative embodiment, discussed above, waveforms may be stored in EEPROM 68. Waveform data acquired by system 40 may be stored in X-MEMORY 63 or Y-MEMORY 65 and transferred therefrom to EEPROM 68 for later retrieval. The waveform data stored in EEPROM 68 remains after power is turned off, or otherwise removed from the memory device, whereas, data stored in RAM 66 (SRAM) disappears when power is removed.

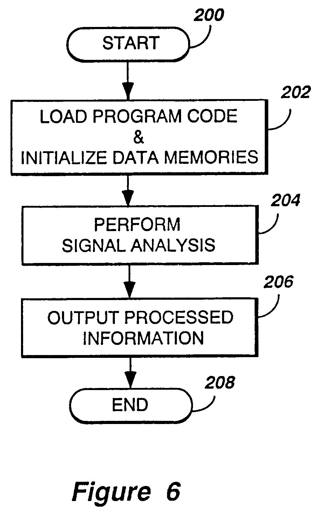

FIGURE 6 is a simplified flow chart illustrating, in broad functional terms, steps of a program executed by DSP-based CPU 42. The program starts at block 200 when the signal processing system is powered-up. In an application in which the signal processing system is implemented in a test tool, this step may occur when the instrument is turned on. The program proceeds to block 202 and loads program code from BOOT ROM 64 into PROGRAM MEMORY 66 and, possibly, into RAM 66. During this step, the program also initializes the data memories (i.e., X-DATA MEMORY 63 & Y-DATA MEMORY 65). Next, the program proceeds to block 204, and instructs system 40 to perform the signal processing operations called for. The program then proceeds to block 206 and outputs the processed information in the particular format(s) called for, and then ends at block 208.

Various system control functions are being performed during each program step of FIGURE 6. Signal processing system 40 performs these functions in response to instructions provided by the program. Thus, while not called out specifically in FIGURE 6, it is to be understood that program instructions and the resulting responses by the system are inherent in the functional steps illustrated in FIGURE 6.

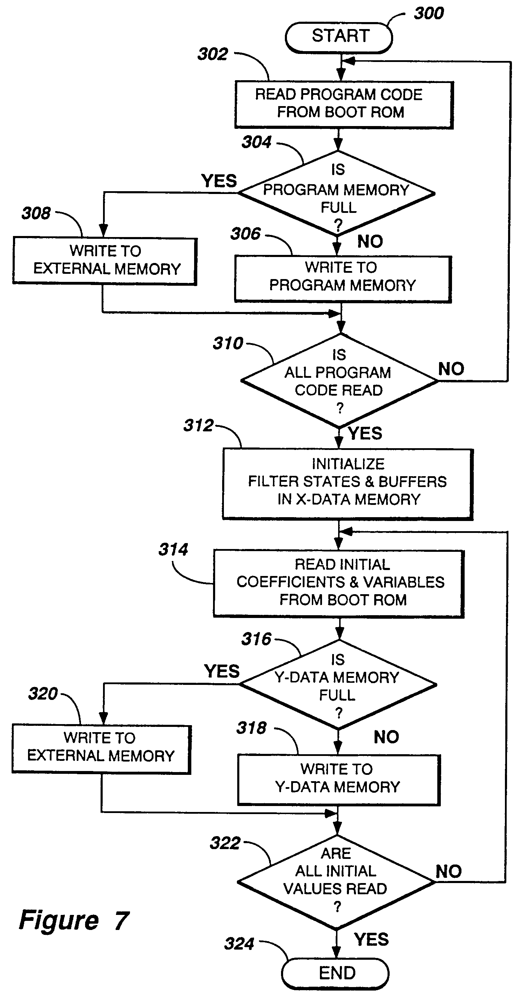

FIGURE 7 illustrates in greater detail, program steps executed by CPU 42 during the functional step represented by block 202 of FIGURE 6. The program starts at block 300 when the signal processor is initialized, that is when CPU 42 is booted-up. The program proceeds to block 302 and instructs the CPU to read program code from a particular memory location in the BOOT ROM (64). After the CPU reads this program code, the program proceeds to decision block 304 and determines whether the PROGRAM MEMORY (67) is full. If PROGRAM MEMORY is not full and if it contains sufficient free memory, the program code is written into PROGRAM MEMORY (block 306). If PROGRAM MEMORY is full, or if there is otherwise insufficient memory for the program code, the program proceeds to block 308 and instructs the CPU to write the program code to external memory (RAM 66). Once this program code has been written into PROGRAM MEMORY or external memory, the program proceeds to decision block 310 to determine whether all program code has been read from the BOOT ROM. If there is still program code that has not been read from the BOOT ROM, the program returns to block 302.

As an alternative to the above-discussed steps, the program may instruct CPU 42 to initially read only a portion of the program code in BOOT ROM 64 (block 302). Once this portion of the program code has been written to program memory (block 306) or external memory (block 308), the program determines if all of the desired portion of the program code has been read (block 310) and proceeds as described above. This situation may arise when it is desired to leave some program code in BOOT ROM 64, for example, when free space in PROGRAM MEMORY 67 or RAM 66 is limited, or if the additional code is expected to be used only rarely.

In any event, if all of the program code, or all of the desired program code, in the BOOT ROM has been read, the program instructs the CPU to proceed to block 312 and initialize the X-DATA MEMORY, as described next.

During this step (block 312), the program instructs CPU 42 to read initial values of a first set of data in BOOT ROM 64 and load these values into X-DATA MEMORY 63. In accordance with a preferred embodiment of the present invention, the initial data read during this step and loaded into X-DATA MEMORY includes all states used to begin digital filtering and any values loaded into buffer memory space.

Next the program proceeds to block 314 and reads initial values of a second set of data in BOOT ROM 64. This set of data includes initial values of filter coefficients used during digital filtering and other variables used for system control and signal processing operations. Once this data is read from a particular memory location in BOOT ROM 64, the program proceeds to block 316 and determines whether Y-DATA MEMORY is full. If Y-MEMORY is not full and if it contains sufficient free memory, the data is written into Y- MEMORY (block 318). If Y-MEMORY is full, or if there is otherwise insufficient memory for the initial data values, the program proceeds to block 320, and writes the data to external memory (i.e., RAM 66). Once the data has been written into Y-MEMORY or external memory, the program proceeds to decision block 322 and determines whether all initial values of this set of data has been read from the BOOT ROM. If there is still data in the BOOT ROM that has not been read into Y-MEMORY or external memory, the program returns to block 314. If, on the other hand, all of the data has been read, the program proceeds to block 324 and ends.

While preferred and alternative embodiments of the present invention have been illustrated and described, it will be appreciated that various changes can be made without departing from the spirit and scope of the invention. For example, a DSP chip other than the Motorola device described herein may be substituted and internal memories of the DSP may be structured differently than in the Motorola chip. The peripheral devices may vary both in quantity and type from those described herein. Likewise, the number and order of program steps executed during by the CPU may vary from the illustrative steps presented herein. Consequently, the invention can be practiced otherwise than as specifically described herein.

## Claims

1. A signal processing system comprising:
(a) input means for receiving an input signal and converting said input signal to digital information;
(b) first memory means for storing a program that includes system control instructions, signal processing instructions and data; and,
(c) a DSP-based CPU coupled to said input means for receiving said digital information and to said first memory means for receiving said system control instructions, signal processing instructions and data, wherein said DSP-based CPU controls said signal processing system in response to said system control instructions, performs signal processing operations on said digital information in response to said signal processing instructions and said data, and produces an output as a result of said signal processing operations.

2. A signal processing system according to claim 1, wherein said first memory means includes read only memory external to said DSP-based CPU.

3. A signal processing system according to claim 1, wherein said DSP-based CPU includes second memory means, said second memory means comprising:
(a) a program memory for storing said system control instructions and said signal processing instructions; and,
(b) a data memory for storing said data.

4. A signal processing system according to claim 3, wherein said signal processing system further includes third memory means for storing portions of said system control instructions and said signal processing instructions that are not copied to said second memory means.

5. A signal processing system according to claim 4, wherein said third memory means is a memory external to said DSP-based CPU.

6. A signal processing system according to claim 4, wherein said third memory means includes:
(a) a plurality of memories external to said DSP-based CPU; and,
(b) a memory control circuit coupled between said DSP-based CPU and said plurality of memories for controlling access to said plurality of memories, said memory control circuit being responsive to instructions from said DSP-based CPU.

7. A signal processing system according to claim 3, wherein said signal processing system further includes third memory means for storing a portion of said data that is not copied to said second memory means.

8. A signal processing system according to claim 7, wherein said third memory means is a memory external to said DSP-based CPU.

9. A signal processing system according to claim 7, wherein said third memory means includes:
(a) a plurality of memories external to said DSP-based CPU; and,
(b) a memory control circuit coupled between said DSP-based CPU and said plurality of memories for controlling access to said plurality of memories, said memory control circuit being responsive to instructions from said DSP-based CPU.

10. A signal processing system according to claim 1, further comprising a plurality of peripheral devices coupled to said DSP-based CPU and controlled by said DSP-based CPU in response to said system control instructions.

11. A signal processing system according to claim 10, wherein said plurality of peripheral devices includes:
(a) a user interface coupled to supply input data to said DSP-based CPU; and,
(b) a display coupled to receive said output from said DSP-based CPU.

12. A signal processing system according to claim 11, wherein said user interface is a keyboard.

13. A signal processing system according to claim 11, wherein said display is a liquid crystal display.

14. In a signal processing system, a method for using a DSP-based CPU to perform system control and to perform signal processing operations on an analog signal, said method comprising the steps of:
(a) converting said analog signal to digital information;
(b) reading system control instructions in a first memory and copying said system control instructions into a second memory in said DSP-based CPU;
(c) reading signal processing instructions in said first memory and copying said signal processing instructions into said second memory in said DSP-based CPU;
(d) performing system control functions with said DSP-based CPU in response to said system control instructions stored in said second memory;
(e) performing signal processing operations on said digital information in response to said signal processing instructions stored in said second memory; and,
(f) producing an output resulting from said signal processing operations.

15. A method according to claim 14, further comprising the step of visually displaying said output.

16. A method according to claim 14, further comprising the steps of:
(a) reading initial values of data in said first memory and copying said initial values of data into said second memory in said DSP-based CPU for use in said step of performing signal processing operations on said digital information.

17. A method according to claim 14, further comprising the steps of:
(a) reading portions of said system control instructions and said signal processing instructions that area not copied into said second memory; and,
(b) storing said portions into a third memory that is external to said DSP-based CPU.

18. A method according to claim 17, further comprising the step of controlling access to said third memory with said DSP-based CPU in response to said system control instructions.
